# FASCICULE DE BREVET EUROPEEN

(11) **EP 2 356 810 B1**
(45) Date de publication et mention de la délivrance du brevet: **28.09.2016**
(21) Numéro de dépôt: 09771357.2
(22) Date de dépôt: 10.12.2009
(51) Int. Cl.: H04N 5/355, H04N 5/378

(54) **CAPTEUR D'IMAGE À DOUBLE TRANSFERT DE CHARGES POUR GRANDE DYNAMIQUE ET PROCÉDÉ DE LECTURE**
BILDAUFNEHMER MIT DOPPELTER LADUNGSTRÄGERÜBERTRAGUNG FÜR HOHEN DYNAMIKUMFANG UND DAS ENTSPRECHENDE STEUERUNGSVERFAHREN
IMAGING DEVICE WITH DOUBLE CHARGE TRANSFER FOR HIGH DYNAMIC RANGE AND THE CORRESPONDING DRIVING METHOD

(30) Priorité: 12.12.2008 FR 0806999
(43) Date de publication de la demande: 17.08.2011
(73) Titulaire: E2V Semiconductors, 38120 Saint Egrève (FR)
(72) Inventeur: LECONTE, Jacques, F-38380 Saint Christophe Sur Guiers (FR)
(74) Mandataire: Bréda, Jean-Marc
(86) Numéro de dépôt international: PCT/EP2009/066860
(87) Numéro de publication internationale: WO 2010/066850

(56) Documents cités:
- EP-A2- 1 237 357
- WO-A1-99/34592
- WO-A1-2004/074789
- US-B1- 6 615 645

## Description

L'invention concerne les capteurs d'image électronique et plus particulièrement ceux qui fonctionnent à partir de pixels actifs eh technologie MOS. L'invention concerne notamment un procédé de commande des différents transistors qui constituent les pixels.

Les pixels actifs comprennent en général une photodiode et trois, quatre ou cinq transistors MOS permettant de contrôler la lecture des charges générées par la lumière dans la photodiode. Les pixels à trois transistors fonctionnent en transférant directement sur un conducteur de colonne le potentiel de la photodiode, potentiel qui varie en fonction de l'éclairement et du temps d'intégration de la lumière. Les pixels à quatre transistors fonctionnent en transférant d'abord de la photodiode vers un noeud de stockage capacitif les charges générées par la lumière, puis en reportant sur un conducteur de colonne le potentiel du noeud de stockage ; un des transistors sert à réinitialiser le potentiel du noeud de stockage avant le transfert de charges de la photodiode vers le noeud de stockage. Les pixels à cinq transistors comportent en outre un transistor de réinitialisation du potentiel de la photodiode.

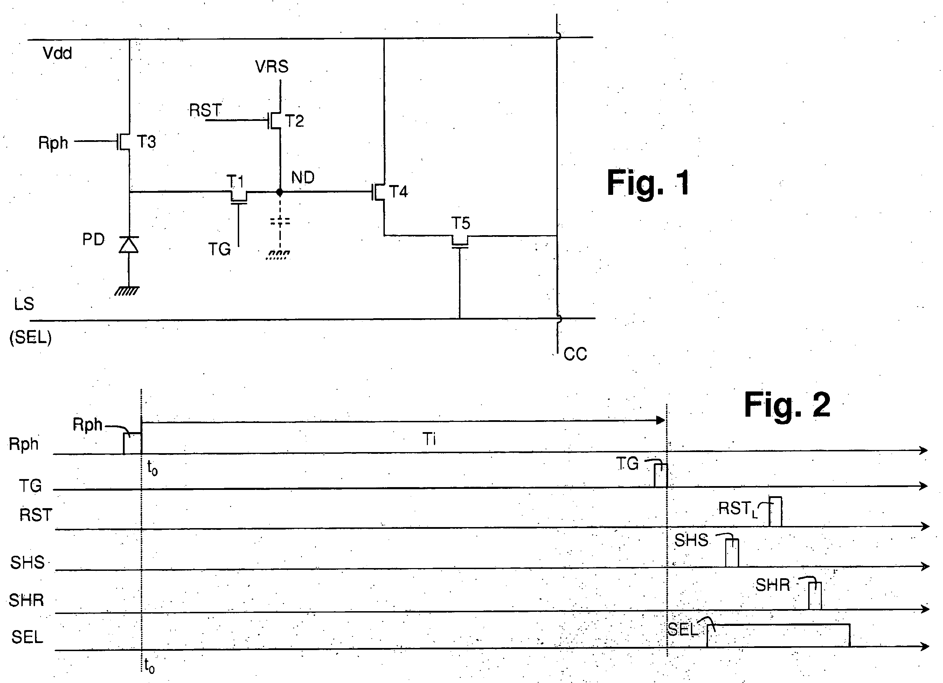

On s'intéresse ici plus particulièrement aux pixels à quatre ou cinq transistors. La structure d'un pixel à cinq transistors est rappelée à la figure 1. Un tel pixel comporte une photodiode PD, un noeud de stockage capacitif ND (représenté par un simple point sur la figure 1, et réalisé en pratique par une petite diffusion de type N dans un substrat de type P), un transistor de transfert de charges T1 entre la cathode de la photodiode et le noeud de stockage, un transistor T2 de réinitialisation du potentiel du noeud de stockage, un transistor T3 de réinitialisation du potentiel de la cathode de la photodiode, un transistor suiveur T4, un transistor de sélection de ligne T5. Pour un pixel à quatre transistors le transistor T3 serait supprimé.

La photodiode est en général constituée par une diffusion de type N dans un substrat P, mais cette diffusion est de préférence recouverte d'une région superficielle P+ reliée à la masse, ce qui permet de mieux fixer son potentiel lorsqu'elle est réinitialisée. Le transistor de transfert T1 est commandé par un signal de transfert TG. Le transistor T2 de réinitialisation du noeud de stockage a son drain relié à un potentiel de réinitialisation VRS (qui est en général le potentiel d'alimentation Vdd) et il est commandé par un signal de commande de réinitialisation RST. Le transistor T3 de réinitialisation de la photodiode est relié entre la cathode de la photodiode et un potentiel d'alimentation Vdd. Il est commandé par un signal de réinitialisation Rph. Le transistor suiveur T4 a son drain relié à un potentiel de référence qui peut être l'alimentation Vdd, sa source reliée au transistor de sélection de ligne T5, et sa grille reliée au noeud de stockage. ND. Enfin, le transistor de sélection de ligne T5 a sa grille reliée à un conducteur de sélection de ligne LS qui relie tous les transistors de sélection de ligne d'une même ligne de pixels ; cette ligne est commandée par un signal de sélection de ligne SEL propre à cette ligne ; le drain de T5 est relié à la source du transistor suiveur et sa source est reliée à un conducteur de colonne CC commun à tous les pixels d'une même colonne de pixels. Ce conducteur de colonne est relié à un circuit de lecture non représenté, au pied de la colonne.

Le fonctionnement habituel d'une matrice comprenant de tels pixels à cinq transistors est le suivant. Il est décrit en préférence au chronogramme de la figure 2.

Un créneau temporel Rph est appliqué à la grille du transistor T3. Sa durée ou sa position dépend du temps d'intégration désiré pour une image. En effet, tant que ce créneau est actif il empêche toute intégration de charges dans la photodiode. Le temps d'intégration Ti démarre lorsque ce créneau se termine (temps t₀).

A la fin de la durée Ti un créneau de transfert TG est appliqué à la grille des transistors de transfert T1 de la ligne. Ce créneau autorise le déversement dans le noeud de stockage ND de toutes les charges accumulées dans la photodiode. La fin de ce créneau marque la fin du temps d'intégration Ti pour une ligne ou pour toute la matrice.

Le transistor de sélection de ligne T5 est alors rendu conducteur par un créneau de sélection de ligne SEL (ligne par ligne). Seul le créneau SEL pour la première ligne de la matrice est représenté. Les créneaux pour les autres lignes suivent, sans se chevaucher. Pendant tout le créneau SEL, le potentiel présent sur le noeud de stockage ND des transistors de la ligne est reporté par le transistor suiveur T4 sur le conducteur de colonne CC et est lu par un circuit de lecture respectif associé à chaque colonne.

Pendant le créneau SEL, et ceci pour chaque ligne, un créneau de commande SHS est appliqué dans le circuit de lecture (non représenté) au pied de la colonne de pixels, pour prendre un premier échantillon du potentiel présent sur le conducteur de colonne. Ce potentiel dépend de la quantité de charges résultant de l'éclairement du pixel pendant la durée d'intégration Tᵢ.

Puis, toujours pendant le même créneau SEL, un créneau RST_{L} est appliqué aux grilles des transistors T2 de tous les pixels de la ligne sélectionnée. Le potentiel du noeud de stockage est réinitialisé à une valeur dictée par la valeur VRS appliquée au drain des transistors T2.

Enfin, toujours pendant le même créneau SEL, un créneau SHR est appliqué aux circuit de lecture pour prendre un deuxième échantillon du potentiel du conducteur de colonne.

Un convertisseur analogique-numérique convertit la différence entre les deux échantillons. Le convertisseur est spécifique à chaque colonne ou bien unique pour toutes les colonnes.

On souhaite que le capteur enregistre des images ayant la plus grande dynamique possible, c'est-à-dire qu'on veut des pixels sensibles en présence d'un faible éclairement mais capables de recevoir des images très lumineuses sans saturation. Plusieurs solutions ont été recherchées pour obtenir une grande dynamique.

Une solution consiste à utiliser une capture successive de plusieurs images avec des temps d'intégration différents. Si le signal fourni par un pixel ayant subi un temps d'intégration long est saturé, il est remplacé par un signal du même pixel, ayant subi un temps d'intégration court. Cela suppose de prendre plusieurs images successives et le temps d'acquisition globale est long. De plus il faut traiter les images pixel par pixel pour choisir le signal le mieux adapté pour chacun avant de passer à une image suivante.

Une autre solution consiste à avoir une matrice mixte avec des petits pixels et des grands pixels. Les petits pixels, moins sensibles, servent s'il y a beaucoup de lumière. Il faut un traitement adapté complexe et on réduit la résolution globale de la matrice.

Une autre solution encore consiste à mesurer le temps que met un pixel pour arriver à saturation pour en déduire une information sur le niveau de lumière en présence d'éclairements saturants. Cela suppose des pixels plus complexes.

Des solutions avec des pixels à fonction logarithmique ou linéaire-logarithmique ou à variation de pente de la courbe de réponse ont par ailleurs été proposées pour des pixels à trois transistors. Elles reposent sur une variation du potentiel de la grille du transistor de réinitialisation de la photodiode. Ces solutions sont sensibles à des dispersions technologiques : dispersion de tensions de seuil des transistors des différents pixels et dispersion du potentiel à vide de la photodiode après réinitialisation.

Dans la publication PCT WO 99/34592, on a proposé un dispositif dont le circuit de lecture comprend une première capacité pour stocker un niveau de potentiel de réinitialisation du noeud de stockage du pixel, une deuxième capacité pour stocker un niveau de potentiel pris par le noeud de stockage après une première durée d'intégration, une troisième capacité pour stocker un niveau de potentiel pris par le noeud de stockage après une deuxième durée d'intégration suivant la première mais beaucoup plus courte que la première, et un circuit à seuil pour comparer le niveau de potentiel dans la première capacité à un seuil et utiliser le potentiel stocké dans la deuxième capacité plutôt que dans la première au cas où, par suite d'un éclairement trop fort, le seuil serait dépassé.

Ce dispositif requiert trois capacités d'échantillonnage. Or, les capacités d'échantillonnage occupent une surface très importante dans le circuit de lecture (ordre de grandeur 15% de la surface pour chaque capacité). D'autre part, les capteurs d'image matriciels sont très sensible à un effet qui est le bruit de lecture fixe en colonne. Ce bruit résulte des dispersions d'offset des amplificateurs de colonne et se traduit par des lignes verticales parallèles très visibles à l'oeil lors de l'affichage des images. Il existe des procédés pour le réduire, mais ces procédés ne s'appliquent pas s'il y a trois capacités. On peut noter d'ailleurs que si ce bruit n'est pas éliminé, il est finalement multiplié par le rapport des durées d'intégration dans le cas où on utilise la deuxième capacité plutôt que la première,

L'invention a pour but de proposer un procédé de commandé du capteur, qui permet d'obtenir une grande dynamique, en utilisant seulement deux capacités ce qui autorise en particulier une réduction du bruit fixe de colonne, et en conservant une linéarité du signal par rapport à la luminosité reçue, pour les faibles éclairements comme pour les forts éclairements. Cette linéarité facilite en particulier les corrections colorimétriques dans les capteurs d'image en couleurs, alors qu'une réponse non alinéaire rend plus difficile les corrections colorimétriques. Une réponse non linéaire rend également plus difficile les corrections automatique de gain ou d'exposition.

Selon l'invention, on propose un procédé de lecture des charges issues des pixels d'une matrice de prise d'image, dans lequel les pixels d'une même ligne sont adressés simultanément pour établir chacun, sur un conducteur de colonne respectif relié à un circuit de lecture, un niveau de potentiel représentant les charges générées par l'éclairement de ce pixel, et dans lequel un pixel comprend au moins une photodiode, un noeud de stockage de charges, et un transistor de sélection de ligne pour relier le noeud de stockage au conducteur de colonne ou l'isoler de ce conducteur. L'intégration de charges dans la photodiode et la lecture des charges soit faites selon la succession d'opérations suivantes : intégration de charges dans la photodiode pendant une première durée d'intégration Ti1, premier transfert des charges ainsi intégrées de la photodiode vers le noeud de stockage à la fin de la première durée d'intégration, intégration de charges dans la photodiode pendant une deuxième durée Ti2 différente de la première, établissement d'une connexion entre le noeud de stockage et le conducteur de colonne, premier échantillonnage, dans une capacité du circuit de lecture, d'un premier niveau de potentiel présent à ce moment sur le conducteur de colonne et résultant du premier transfert de charges, deuxième transfert de charges de la photodiode dans le noeud de stockage, et ultérieurement une conversion analogique-numérique du niveau de potentiel échantillonné dans la capacité. Le procédé est caractérisé en ce que la première durée est plus courte que la deuxième et en ce que l'on effectue un deuxième échantillonnage conditionnel, dans la même capacité, d'un deuxième niveau de potentiel présent sur le conducteur de colonne et résultant du deuxième transfert de charges, le deuxième échantillonnage. étant conditionné par le résultat d'une comparaison entre le deuxième niveau de potentiel présent sur le conducteur de colonne et un niveau de seuil prédéterminé ; le résultat de la comparaison est transmis pour déterminer un facteur multiplicatif à appliquer au résultat de la conversion analogique-numérique.

En d'autres mots, deux lectures successives de niveau de potentiel sont faites après deux intégration de durées différentes consécutives, et on écrase la première lecture par la deuxième en fonction du niveau de signal engendré sur le conducteur de colonne par la plus longue des deux durées. Selon que le niveau (en termes de niveau d'éclairement c'est-à-dire de quantité de charges accumulées dans le noeud de stockage) dépasse ou non le seuil on choisit de conserver le niveau échantillonné dans la capacité pendant la première durée ou de le remplacer par celui qui est échantillonné après la deuxième durée ; on convertit ensuite en valeur numérique le niveau conservé ou le nouveau niveau échantillonné. De plus on conserve en mémoire le résultat de la comparaison. Si le seuil d'éclairement est dépassé, on multiplie ultérieurement le résultat de la conversion numérique par une valeur qui est dans le rapport de la plus longue à la plus courte durée. Si le seuil n'est pas dépassé, on conserve le résultat de la conversion. En pratique là multiplication est faite en dehors du capteur d'image, le capteur n'envoyant qu'un bit d'instruction sur la nécessité d'une multiplication.

L'invention est applicable en principe dans le cas des modes de fonctionnement de capteurs dits en "rolling shutter", c'est-à-dire dans lesquels la réinitialisation des photodiodes est faite ligne par ligne et non simultanément pour toutes les lignes. Toutes les lignes intègrent des charges pendant une même durée mais pas aux mêmes moments.

En pratique, le pixel comprend un transistor de remise à niveau du noeud de stockage, permettant de remettre à un niveau prédéterminé le potentiel du noeud de stockage ; la remise à niveau est faite par mise en conduction brève de ce transistor après le premier échantillonnage ; et un échantillonnage intermédiaire, dans une deuxième capacité d'échantillonnage du circuit d'échantillonnage, est effectué entre cette remise à niveau et le deuxième échantillonnage ; la conversion analogique-numérique porte sur la différence de potentiel entre le niveau échantillonné dans la première capacité et le niveau de potentiel échantillonné dans la deuxième capacité, et non sur la valeur absolue du potentiel de la première capacité, de sorte que des chutes de tension telles que la chute de tension grille-source du transistor suiveur, ainsi que d'autres bruits basse fréquence, s'éliminent.

La première durée d'intégration Ti1 est de préférence une durée beaucoup plus courte que la deuxième durée d'intégration Ti2. Dans ce cas, la comparaison avec le seuil est effectuée avec le deuxième niveau de potentiel présent sur le conducteur de colonne, résultant du deuxième transfert de charges de la photodiode vers le noeud de stockage. Pour cela, l'instant de comparaison est situé entre le début d'un créneau de sélection de la ligne de pixels et une réinitialisation du potentiel du noeud de stockage ; le résultat de la comparaison est conservé ensuite.

On pourrait aussi prévoir (de manière moins avantageuse) que la deuxième durée de stockage est beaucoup plus courte que la première. Dans ce cas la comparaison avec le seuil serait effectuée avec le potentiel présent sur le conducteur de colonne et stocké dans la première capacité d'échantillonnage après le premier transfert de charges.

Outre le procédé de lecture qui vient d'être résumé, l'invention propose un capteur d'image en technologie MOS, comprenant une matrice de pixels organisée en lignes et en colonnes, les pixels d'une même colonne étant reliés à un conducteur de colonne lui-même relié à un circuit de lecture, chaque pixel comportant une photodiode reliée par un transistor de transfert à un noeud de stockage, et un transistor de sélection de ligne pour relier le noeud de stockage au conducteur de colonne ou l'isoler de ce conducteur. Ce capteur comprend des moyens pour effectuer pendant un même cycle d'intégration et de lecture des charges d'un pixel deux transferts de charges, le premier après une première durée d'intégration, le deuxième après une deuxième durée d'intégration plus longue que la première, et un moyen pour échantillonner dans une capacité d'échantillonnage le niveau de potentiel pris par le conducteur de colonne après le premier transfert de charges. Le capteur est caractérisé en ce qu'il comporte en comparateur pour comparer à un seuil le potentiel pris par le conducteur de colonne après la plus longue des deux durées, un moyen pour remplacer ou non, en fonction du résultat de la comparaison, le contenu de la capacité d'échantillonnage par le niveau de potentiel pris par le conducteur de colonne après le deuxième transfert de charges, et un moyen pour fournir un signal de sortie numérique qui est, selon le résultat de la comparaison,
- soit une valeur numérique représentant le niveau de potentiel pris par le conducteur de colonne après la plus longue des deux durées,
- soit une valeur numérique représentant le niveau de potentiel pris par le conducteur de colonne après la plus courte des deux durées,
- et un bit d'information sur le résultat de la comparaison.

Ce bit représente une information sur le choix des la valeur transmise. Il représente aussi une instruction binaire sur la nécessité (dans le deuxième cas) de multiplier la valeur fournie en sortie par le rapport entre la plus longue et la plus courte des deux durées. La première durée est très avantageusement la plus courte.

D'autres caractéristiques et avantages de l'invention apparaîtront à la lecture de la description détaillée qui suit et qui est faite en référence aux dessins annexés dans lesquels :
- la figure 1, déjà décrite, représente la constitution classique d'un pixel actif CMOS à cinq transistors ;
- la figure 2, déjà décrite, représente le chronogramme classique de fonctionnement du pixel de la figure 1 ;
- la figure 3 représente le chronogramme de fonctionnement dans le procédé selon l'invention ;
- la figure 4 représente un circuit de lecture adapté à la mise en oeuvre du procédé de lecture selon l'invention;
- la figure 5 représente un autre chronogramme possible dans une variante de réalisation du procédé de lecture.

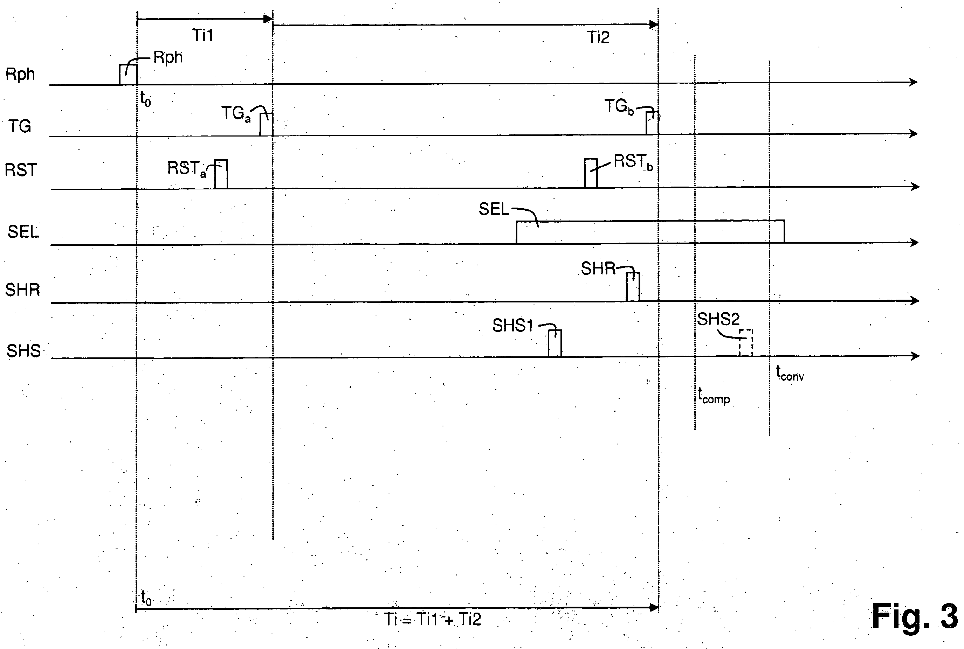

Le procédé selon l'invention peut être appliqué à un pixel à cinq transistors semblable à celui de la figure 1. Le chronogramme de commande selon l'invention est représenté à la figure 3 dans un cas où un cycle d'intégration de charges comprend deux durées successives Ti1 puis Ti2 ou Ti1 est beaucoup plus courte que Ti2. On verra plus loin que l'inverse peut être prévu.

Un créneau temporel de réinitialisation Rph est appliqué à la grille du transistor T3 pour toute une ligne de pixels. Ce créneau agit pour vider vers le potentiel d'alimentation Vdd les charges stockées dans la photodiode PD. Tant que dure ce créneau, l'intégration de charges dans la photodiode est empêchée. Elle est ensuite autorisée dès la fin de ce créneau, à un instant t₀ et jusqu'à la fin de la lecture des charges correspondant au cycle d'intégration en cours. Un nouveau cycle d'intégration débute lors d'un nouveau créneau Rph.

Le créneau Rph est fourni indépendamment pour chaque ligne, de sorte que le temps t₀ commence à des instants successifs pour les lignes successives. Seul le chronogramme correspondant à une ligne est représenté.

Une première intégration de charges dans la photodiode PD se produit à partir du temps t₀ et pendant une durée Ti1.

A un instant intermédiaire au cours de cette durée, on produit sur la grille des transistors T2 de tous les pixels de la ligne un bref créneau RSTₐ qui rend conducteur ces transistors. Le potentiel du noeud de stockage ND est réinitialisé, pour tous les transistors de la ligne, à une valeur fixe.

Puis un créneau de transfert de charges TGₐ est appliqué à la grille de commande des transistors de transfert T1 de la ligne. Les charges générées par la lumière dans la photodiode se déversent dans le noeud de stockage. Elles modifient le potentiel de ce noeud. La fin de la première durée d'intégration de charges Ti1 est définie par la fin du premier créneau de transfert TGₐ.

Une deuxième durée d'intégration Ti2 commence alors. La photodiode a été vidée de ses charges pendant le créneau TGₐ et intègre maintenant d'autres charges.

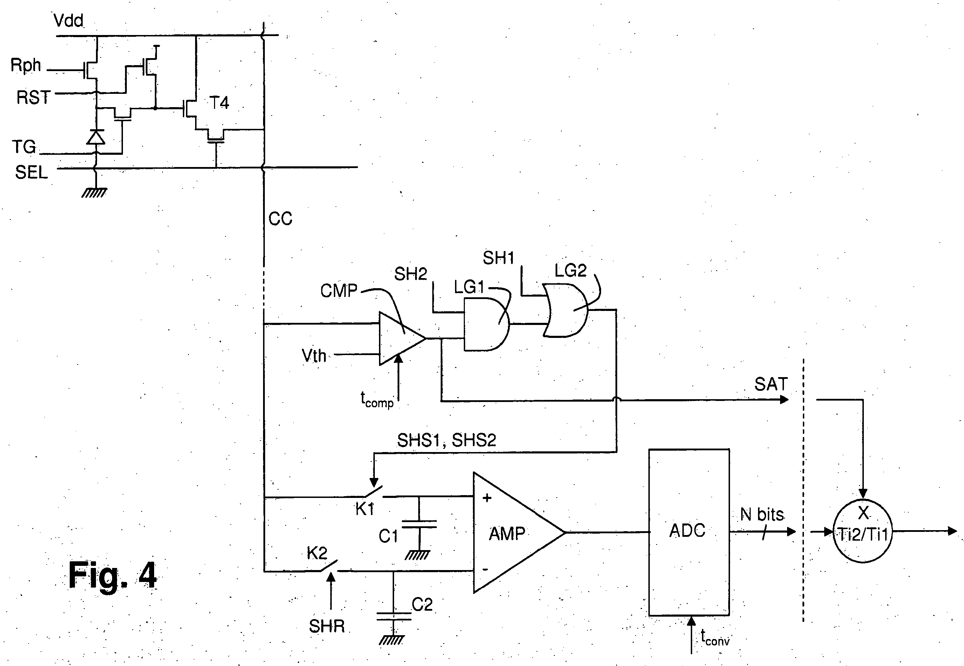

Avant la fin de la durée Ti2, on établit sur la ligne LS un créneau SEL de sélection de la ligne de pixels pour enclencher le processus de lecture des pixels de cette ligne. Ce créneau rend conducteur le transistor de sélection de ligne T5. Ceci active le transistor suiveur T4 et reporte le potentiel du noeud de stockage ND sur le conducteur de colonne CC (à une tension grille-source de transistor près). Le conducteur de colonne prend alors un premier niveau de potentiel. Le créneau SEL reste actif pendant toute la durée de lecture des pixels de la ligne considérée, puis il s'interrompt et ce n'est qu'après cette interruption qu'un créneau semblable peut être appliqué à une autre ligne. Pendant le créneau SEL sont effectuées les opérations suivantes :
- un créneau de commande SHS1 est appliqué dans le circuit de lecture (représenté sur la figure 4) au pied de la colonne de pixels, pour recueillir dans une première capacité C1 du circuit de lecture un premier échantillon du potentiel présent sur le conducteur de colonne ; ce potentiel résulte du premier transfert dé charges et dépend donc de l'éclairement du pixel pendant la première durée d'intégration Ti1 ;
- dans le cas où on veut faire (ce qui est bien préférable) une lecture par différence entre le niveau de potentiel après déversement de charges et le niveau de potentiel après réinitialisation du noeud de stockage, on établit, un deuxième créneau de réinitialisation RST_{b} ; ce créneau est appliqué aux grilles des transistors T2 de la ligne de pixels ; le potentiel du noeud de stockage est réinitialisé à une valeur fixe ; un créneau de commande SHR est alors appliqué au circuit de lecture, pour prendre un échantillon intermédiaire du potentiel de colonne réinitialisé, dans une deuxième capacité d'échantillonnage C2 du circuit de lecture ;
- on applique ensuite, pour tous les pixels de la ligne, un deuxième créneau de transfert TG_{b} à la grille du transistor de transfert T1 ; les charges intégrées pendant la durée Ti2 dans la photodiode se déversent dans lé noeud de stockage ND ; la durée Ti2 se termine à la fin du créneau TG_{b} ; le potentiel du conducteur de colonne suit (à une tension grille-source près) le nouveau potentiel du noeud de stockage suite à ce deuxième transfert de charges.

Selon l'invention, on choisit de stocker ou de ne pas stocker dans la première capacité du circuit de lecture le potentiel pris à ce moment par le conducteur de colonne, et le choix est fait, dans l'exemple de chronogramme de la figure 3, en fonction du deuxième niveau de potentiel pris par le conducteur de colonne à la suite du deuxième déversement de charges représentant l'éclairement pendant la durée Ti2 : si ce deuxième niveau indique le dépassement d'un seuil de quantité de charges dans le noeud de stockage, ce qui revient à indiquer un risque de saturation du signal mesuré, on ne fait pas le déversement ; si au contraire il n'y a pas de dépassement de ce seuil de quantité de charges, on fait le déversement.

Pour cela, un deuxième créneau de commande SHS2 est appliqué conditionnellement au circuit de lecture pour prendre un deuxième échantillon du potentiel du conducteur de colonne dans la première capacité d'échantillonnage du circuit de lecture. Ce créneau SHS2 n'est appliqué que sous réserve d'une condition définie par la comparaison entre le deuxième niveau de potentiel du conducteur de colonne après le deuxième déversement et une valeur de seuil. Le créneau SHS2 a été représenté en pointillés sur la figure 3 car il peut être présent ou absent selon le résultat de la comparaison.

La comparaison est effectuée au cours de la lecture, c'est-à-dire pendant le créneau SEL. L'instant de la comparaison t_{comp} est situé après la fin du deuxième créneau de transfert TG_{b}. La comparaison avec un seuil est donc faite à partir du potentiel présent sur le conducteur de colonne et résultant du deuxième déversement de charges. Ce potentiel représente l'éclairement pendant la duréeTi2.

Le résultat de la comparaison est gardé en mémoire jusqu''a la fin de la lecture (fin du créneau SEL). Ce résultat est transmis comme information binaire à la sortie du capteur, cette information représentant une information sur le dépassement d'un seuil de saturation du pixel.

Ainsi, dans le cas de la figure 3 où Ti1 est beaucoup plus court que Ti2, la lecture fonctionne selon deux possibilités :
- si le potentiel du conducteur de colonne résultant du deuxième déversement de charges montre que la quantité de charges intégrées pendant la durée Ti2 dépasse un seuil, alors on considère qu'il y a saturation du noeud de stockage ; on n'émet pas de créneau SHS2 ; son conserve les charges stockées dans la première capacité d'échantillonnage ; on les convertit en numérique, on les transmet à la sortie du capteur et on transmet aussi un bit d'information de saturation qui sera utilisé (en principe à l'extérieur du capteur) pour multiplier la valeur numérique fournie par le rapport entre la durée Ti2 et la durée Ti1 ; la valeur résultant de la multiplication est une valeur proportionnelle à l'éclairement pendant la durée Ti1 ;
- si au contraire le seuil de quantité de charges n'est pas dépassé, il n'y a pas de risque de saturation ; on émet le créneau SHS2 ; le contenu de la première capacité d'échantillonnage est écrasé et prend un nouvel échantillon du potentiel du colonne, résultant du deuxième déversement de charges ; l'échantillon représente donc l'éclairement pendant la durée Ti2 ; c'est cet échantillon qui est converti en numérique ; le signal de sortie du circuit de lecture est cette valeur, proportionnelle à l'éclairement ; le bit d'information de saturation indique qu'il n'y a pas saturation donc pas de nécessité de multiplier par un coefficient la valeur numérique fournie par le capteur.

Bien entendu, dans le cas où un échantillonnage intermédiaire est fait, après le créneau SHR, dans une deuxième capacité d'échantillonnage C2, c'est la différence entre les potentiels dans la première et la deuxième capacité d'échantillonnage qui est appliquée à un convertisseur anagogique-numérique pour fournir une valeur de signal représentant l'éclairement, aussi bien à faible éclairement qu'à fort éclairement. On élimine ainsi, par différence, les tensions de décalage introduites notamment par le transistor suiveur T4, et on élimine aussi dans une large mesure, pour les niveaux d'éclairement les plus bas (au dessous du seuil de saturation), le bruit pouvant affecter le niveau du potentiel de réinitialisation du noeud de stockage (bruit dit "bruit de reset"). En effet, on fait alors la différence entre un niveau lu pendant le créneau SHS2 et un niveau de réinitialisation lu immédiatement auparavant (pendant le créneau SHR). Il s'agit là d'un double échantillonnage corrélé vrai, car le niveau de réinitialisation stocké perdant l'impulsion SHR résulte d'une réinitialisation (créneau RST_{b}) antérieure au déversement des charges (créneau TG_{b}) qu'on veut lire. Au contraire, lorsqu'on dépasse le seuil de saturation, l'échantillonnage n'est pas un double échantillonnage corrélé car le niveau de réinitialisation stocké dans la capacité résulte de l'impulsion RST_{b} qui est postérieure au déversement des charges (résultant de l'impulsion TGₐ).

La conversion analogique-numérique est effectuée à partir d'un instant t_{conv} situé après le créneau SHS2. Elle peut se faire après la fin du créneau de sélection de ligne SEL, pourvu qu'elle soit terminée avant le créneau SHS1 de la ligne suivante.

La figure 4 représente un circuit de lecture permettant de mettre en oeuvre le procédé de lecture selon l'invention. Un pixel au croisement d'une ligne et d'une colonne a été représenté. Le circuit de lecture est placé au pied de la colonne. Il comprend dans cet exemple deux capacités d'échantillonnage C1 et C2 ; la capacité C1 est reliée au conducteur de colonne CC par l'intermédiaire d'un interrupteur K1 actionné par les signaux SHS1 (à chaque nouvelle lecture d'une ligne) et SHS2 (à chaque lecture de ligne mais à chaque fois sous réserve du résultat fourni par un comparateur CMP). La capacité C2 est reliée au conducteur de colonne CC par l'intermédiaire d'un interrupteur K2 actionné par les signaux SHR (à chaque nouvelle lecture d'une ligne). Un amplificateur AMP recueille la différence entre les niveaux stockés dans les deux capacités et la transmet à un convertisseur analogique-numérique ADC. Ce dernier est activé au temps t_{conv} comme expliqué ci-dessus.

Un petit circuit logique associé au comparateur CAMP produit le créneau SHS2 en fonction du résultat de la comparaison entre un niveau de potentiel présent sur le conducteur de colonne (à l'instant t_{comp} défini plus haut) et un niveau de seuil Vth. Le résultat de la comparaison est conservé en mémoire entre l'instant t_{comp} et la fin de la lecture de la ligne.

Dans l'exemple de la figure 4, le circuit logique produit à la fois le créneau SHS1 et le créneau SHS2. Il reçoit à cet effet un créneau temporel SH1 et un créneau temporel SH2 qui sont produits par un séquenceur à deux instants différents correspondant aux instants choisis pour les créneaux SHS1 et SHS2. Le créneau SH1 est appliqué à une entrée d'une porte OU LG2 dont la sortie commande l'interrupteur K1. Il passe à travers cette porté lorsqu'il est émis et produit le signal SHS1. Le créneau SH2 est appliqué à une entrée d'une porte ET LG1. Il ne passe à travers cette porte, pour fournir un signal SHS2, que pour un des deux états de sortie du comparateur CMP. Une deuxième entrée de la porte ET LG1 reçoit à cet effet la sortie du comparateur CMP. La sortie de la porte ET LG1 est appliquée à une autre entrée de la porte OU LG2.

Le comparateur CMP mémorise le résultat (signal SAT) de la comparaison. Le signal SAT a par exemple un état logique 1 si la quantité de charges déversée lors de la deuxième durée d'intégration (la plus longue) dépasse un seuil qui indique un risque de saturation.

Le signal SAT est fourni à la sortie du capteur et sert à l'établissement de la valeur numérique finale du signal représentant l'éclairement vu par le pixel. Le convertisseur analogique-numérique ADC fournit une valeur numérique par exemple sur N bits et cette valeur est le résultat de la première ou la deuxième intégration selon l'état de la sortie SAT. Si le signal SAT est à un niveau (par exemple 1) qui indique qu'il y a une saturation, la valeur issue de la conversion analogique numérique résulte de l'intégration sur la plus courte des deux durées et devra être multipliée, en principe en dehors du capteur, par un coefficient représentant le rapport Ti2/T1i. Dans le cas contraire, la valeur de sortie sur N bits est utilisée telle quelle.

On notera que le sens de fonctionnement du comparateur dépend du signe des variations de potentiel du conducteur de colonne. Classiquement, le potentiel du conducteur de colonne, supposé positif, est d'autant plus faible que la quantité de charges déversée dans le noeud de stockage est plus grande. Par conséquent, le dépassement d'un seuil de quantité de charges se traduit par la diminution du potentiel de conducteur de colonne au dessous d'un seuil.

A titre d'exemple, le nombre N peut être de 10, et le rapport des durées peut être de 64 ou 128.

Du fait qu'on a besoin seulement d'une capacité C1 pour la mise en mémoire du niveau de signal, et une capacité C2 pour la mise en mémoire du niveau de réinitialisation, on peut facilement éliminer le bruit fixe de colonne qui pourrait être dû à une dispersion des valeurs d'offset des amplificateurs AMP de colonne à colonne. Cette élimination peut se faire par une phase d'auto-zéro dans laquelle les deux entrées de l'amplificateur (qui sont reliées directement aux capacités) sont court-circuitées. Le décalage qui résulte de ce court-circuit est conservé en mémoire et restitué lors de la lecture proprement dite après la phase d'autozéro. Une élimination simple n'est pas possible avec le circuit à trois capacités du document WO 99/34592 précédemment cité.

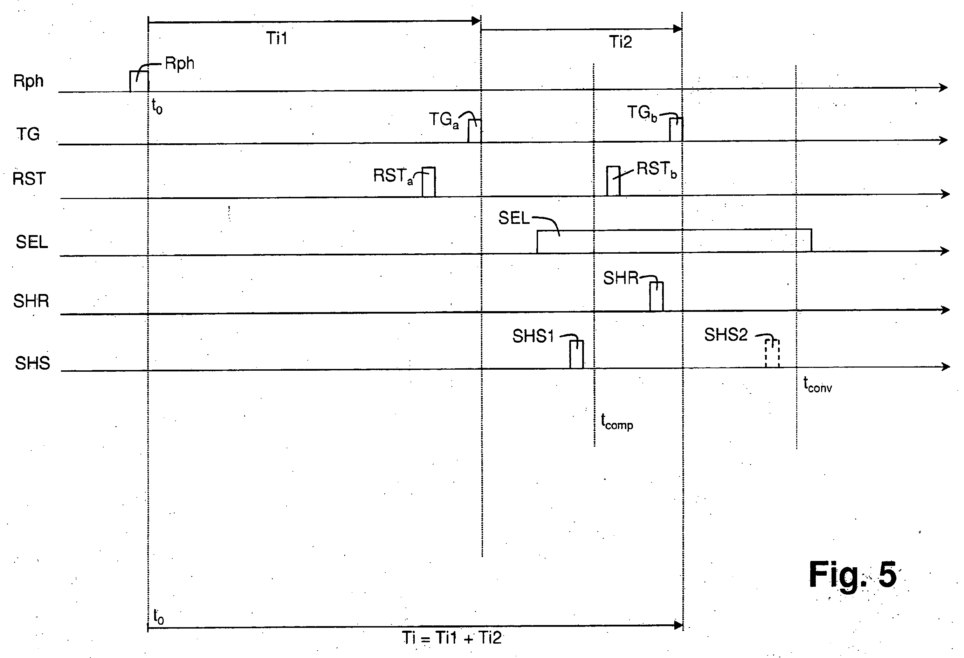

La figure 5 représente une variante de chronogramme de fonctionnement, dans laquelle on choisit d'avoir une durée Ti2 beaucoup plus courte que la durée Ti1. Cette variante est cependant beaucoup moins intéressante en ce sens qu'elle permet une mesure par double échantillonnage corrélé vrai pour les mesures de fortes luminances (au-delà du seuil de saturation) donc pour les mesures résultant de l'intégration courte, mais pas pour les mesures de faibles luminances. Alors que la réalisation des figures 3 et 4 permet un double échantillonnage corrélé vrai pour les mesures de faibles luminances, au-dessous du seuil de saturation, mais pas pour les mesures de fortes luminances. Il est beaucoup plus avantageux d'avoir un double échantillonnage corrélé vrai pour les faibles luminances. La différence par rapport au chronogramme de la figure 3 est le fait que l'instant de la comparaison t_{comp} est situé avant le deuxième créneau de transfert TG_{b}. La comparaison avec un seuil est donc faite à partir du potentiel présent sur le conducteur de colonne et résultant du premier déversement de charges. Ce potentiel représente l'éclairement pendant la durée Ti1 alors que dans le cas de la figure 3 il représentait l'éclairement pendant la durée Ti2.

Pour faire la comparaison, on peut comparer à un seuil soit le potentiel du conducteur de colonne lorsqu'il est au premier niveau, soit, ce qui revient au même, le potentiel qui a été stocké dans la première capacité d'échantillonnage C1 puisque il est justement égal à ce premier niveau. Si la comparaison est faite en utilisant le conducteur de colonne, il faut faire la comparaison à un instant t_{comp} situé nécessairement avant le deuxième créneau de transfert TG_{b} et même avant le créneau de réinitialisation RST_{b} du noeud de stockage.. Si au contraire la comparaison est faite en utilisant le potentiel de la première capacité d'échantillonnage, on peut faire la comparaison à un instant t_{comp} quelconque mais situé après le créneau SHS1 (et bien sûr avant l'instant prévu pour le créneau SHS2. Le résultat de la comparaison est gardé en mémoire jusqu'à la fin de la lecture et de la conversion analogique-numérique puisqu'il doit être transmis comme information binaire de saturation SAT à la sortie du capteur.

Un circuit semblable à celui de la figure 4 peut encore être utilisé mais avec les deux différences suivantes : d'une part le sens de la comparaison doit être inversé, en ce sens que le signal SHS2 doit être émis lorsqu'il y a risque de saturation (dépassement d'une quantité de charges déversée dans le noeud de stockage pendant la durée Ti1) ; on remplace alors le potentiel de la capacité d'échantillonnage (résultant de l'éclairement pendant la durée Ti1) par le deuxième niveau de potentiel du conducteur de colonne, résultant du deuxième transfert de charges. Et d'autre part, en cas de saturation, le bit de saturation signifie qu'il faut multiplier la sortie du capteur par Ti1/Ti2 et non par Ti2/Ti1, c'est-à-dire qu'on le multiplie toujours par le rapport entre la durée la plus longue et la durée la plus courte.

## Revendications

1. Procédé de lecture des charges issues des pixels d'une matrice de prise d'image, dans lequel les pixels d'une même ligne sont adressés simultanément pour établir chacun, sur un conducteur de colonne respectif (CC) relié à un circuit de lecture, un niveau de potentiel représentant les charges générées par l'éclairement de ce pixel, et dans lequel un pixel est un pixel actif qui comprend au moins une photodiode (PD), un noeud de stockage de charges (ND), et un transistor de sélection de ligne (T5) pour relier le noeud de stockage au conducteur de colonne ou l'isoler de ce conducteur, l'intégration de charges dans la photodiode et la lecture des charges étant faites selon la succession d'opérations suivantes : intégration de charges dans la photodiode pendant une première durée d'intégration Ti1, premier transfert des charges ainsi intégrées de la photodiode vers le noeud de stockage à la fin de la première durée d'intégration, intégration de charges dans la photodiode pendant une deuxième durée Ti2 différente de la première, report du potentiel du noeud de stockage (ND) sur le conducteur de colonne (CC), premier échantillonnage, dans une capacité (C1) du circuit de lecture, d'un premier niveau de potentiel présent à ce moment sur le conducteur de colonne et résultant du premier transfert de charges, deuxième transfert de charges de la photodiode dans le noeud de stockage, et ultérieurement une conversion analogique-numérique du niveau de potentiel échantillonné dans la capacité, procédé **caractérisé en ce que** la première durée d'intégration est plus courte que la deuxième, et **en ce que** après le deuxième transfert de charge et avant la conversion analogique-numérique, on effectue un deuxième échantillonnage conditionnel, dans la même capacité, d'un deuxième niveau de potentiel présent sur le conducteur de colonne et résultant du deuxième transfert de charges, le deuxième échantillonnage étant conditionné par le résultat d'une comparaison entre le deuxième niveau de potentiel présent sur le conducteur de colonne et un niveau de seuil prédéterminé, le résultat de la comparaison étant transmis pour déterminer un facteur multiplicatif à appliquer au résultat de la conversion analogique-numérique.

2. Procédé selon la revendication 1, **caractérisé en ce qu'**on établit un signal représentant l'éclairement du pixel en multipliant la sortie de la conversion analogique-numérique par le facteur multiplicatif, le facteur multiplicatif étant le rapport entre la plus longue et la plus courte durée d'intégration dans le cas où le résultat de la comparaison indique un dépassement de seuil de quantités de charges déversées dans le noeud de stockage pendant la plus longue des durées et étant 1 dans le cas contraire.

3. Procédé selon l'une des revendications 1 et 2, **caractérisé en ce que** le pixel comprend un transistor de remise à niveau du noeud de stockage, permettant de remettre à un niveau prédéterminé le potentiel du noeud de stockage, **en ce que** la remise à niveau est faite par mise en conduction brève de ce transistor après le premier échantillonnage, et **en ce qu'**un échantillonnage intermédiaire, dans une deuxième capacité d'échantillonnage (C2) du circuit d'échantillonnage, est effectué entre cette remise à niveau et le deuxième transfert de charges, la conversion analogique-numérique se faisant sur la différence des niveaux échantillonnés dans les deux capacités.

4. Capteur d'image en technologie MOS, comprenant une matrice de pixels organisée en lignes et en colonnes, les pixels d'une même colonne étant reliés à un conducteur de colonne lui-même relié à un circuit de lecture, chaque pixel comportant une photodiode reliée par un transistor de transfert à un noeud de stockage, et un transistor de sélection de ligne (T5) pour relier le noeud de stockage au conducteur de colonne ou l'isoler de ce conducteur, le capteur comprenant des moyens pour effectuer pendant un même cycle d'intégration et de lecture des charges d'un pixel deux transferts de charges, le premier après une première durée d'intégration (Ti1), le deuxième après une deuxième durée d'intégration (Ti2) plus longue que la première, et un moyen pour échantillonner dans une capacité d'échantillonnage le niveau de potentiel pris par le conducteur de colonne après le premier transfert de charges, **caractérisé en ce qu'**il comporte un comparateur (CMP) pour comparer à un seuil le potentiel pris par le conducteur de colonne après la plus longue des deux durées, un moyen pour remplacer ou non, en fonction du résultat de la comparaison, le contenu de la capacité d'échantillonnage par le niveau de potentiel pris par le conducteur de colonne après le deuxième transfert de charges, et un moyen pour fournir un signal de sortie numérique qui est, selon le résultat de la comparaison,
- soit une valeur numérique représentant le niveau de potentiel pris par le conducteur de colonne après la plus longue des deux durées,
- soit une valeur numérique représentant le niveau de potentiel pris par le conducteur de colonne après la plus courte des deux durées,
- et un bit d'information sur le résultat de la comparaison.

## Patentansprüche

1. Verfahren zum Lesen von von Pixeln einer Bildaufnahmematrix ausgegebenen Ladungen, bei dem die Pixel einer selben Reihe gleichzeitig adressiert werden, um jeweils auf einen jeweiligen Spaltenleiter (CC), der mit einer Leseschaltung verbunden ist, einen Potentialpegel zu erzielen, der die durch Beleuchten dieses Pixels erzeugten Ladungen repräsentiert; und bei dem ein Pixel ein aktives Pixel ist, das wenigstens eine Fotodiode (PD), einen Ladungsspeicherknoten (ND) und einen Reihenauswahltransistor (T5) zum Verbinden des Speicherknotens mit dem Spaltenleiter oder zum Isolieren dieses Leiters umfasst, wobei die Ladungsintegration in der Fotodiode und das Lesen der Ladungen gemäß der folgenden Operationsfolge durchgeführt werden: Integrieren von Ladungen in der Fotodiode während einer ersten Integrationsdauer Ti1, erstes Übertragen von so integrierten Ladungen der Fotodiode zum Speicherknoten am Ende der ersten Integrationsdauer, Integrieren von Ladungen in der Fotodiode während einer zweiten Dauer Ti2, die sich von der ersten unterscheidet, Übertragen des Potentials des Speicherknotens (ND) auf den Spaltenleiter (CC), erstes Abtasten, in einem Kondensator (C1) der Leseschaltung, eines ersten Potentialpegels, der in diesem Moment am Spaltenleiter anliegt und von der ersten Ladungsübertragung resultiert, zweites Übertragen von Ladungen der Fotodiode im Speicherknoten und schließlich Analog-Digital-Umwandeln des im Kondensator abgetasteten Potentialpegels, wobei das Verfahren **dadurch gekennzeichnet ist, dass** die erste Integrationsdauer kürzer ist als die zweite, und dadurch, dass nach der zweiten Ladungsübertragung und vor der Analog-Digital-Umwandlung eine zweite konditionelle Abtastung, im selben Kondensator, eines zweiten Potentialpegels erfolgt, das an dem Spaltenleiter anliegt und von der zweiten Ladungsübertragung resultiert, wobei die zweite Abtastung durch das Ergebnis eines Vergleichs zwischen dem am Spaltenleiter anliegenden zweiten Potentialpegel und einem vorbestimmten Schwellenpegel konditioniert ist, wobei das Ergebnis des Vergleichs zum Bestimmen eines Multiplikationsfaktors gesendet wird, der auf das Ergebnis der Analog-Digital-Umwandlung anzuwenden ist.

2. Verfahren nach Anspruch 1, **dadurch gekennzeichnet, dass** ein Signal erzeugt wird, das die Beleuchtung des Pixels repräsentiert, durch Multiplizieren des Ausgangs der Analog-Digital-Umwandlung mit dem Multiplikationsfaktor, wobei der Multiplikationsfaktor das Verhältnis zwischen der längsten und der kürzesten Integrationsdauer in dem Fall ist, in dem das Ergebnis des Vergleichs eine Schwellenüberschreitung von übergelaufenen Ladungsmengen im Speicherknoten während der längsten Dauer anzeigt, und im gegenteiligen Fall 1 ist.

3. Verfahren nach einem der Ansprüche 1 und 2, **dadurch gekennzeichnet, dass** das Pixel einen Transistor zum Zurückstellen auf den Pegel des Speicherknotens umfasst, so dass das Potential des Speicherknotens auf einen vorbestimmten Pegel zurückgestellt werden kann, dadurch, dass die Pegelrückstellung durch kurzes Leitendmachen dieses Transistors nach der ersten Abtastung erfolgt, und dadurch, dass eine Zwischenabtastung, in einem zweiten Abtastkondensator (C2) der Abtastschaltung, zwischen dieser Pegelrückstellung und der zweiten Ladungsübertragung erfolgt, wobei die Analog-Digital-Umwandlung an der Differenz der in den beiden Kondensatoren abgetasteten Pegel erfolgt.

4. Bildaufnehmer in MOS-Technologie, umfassend eine in Reihen und Spalten organisierte Pixelmatrix, wobei die Pixel einer selben Spalte mit einem Spaltenleiter verbunden sind, der wiederum mit einer Leseschaltung verbunden ist, wobei jedes Pixel eine Fotodiode umfasst, die durch einen Übertragungstransistor mit einem Speicherknoten verbunden ist, und einen Reihenauswahltransistor (T5) zum Verbinden des Speicherknotens mit dem Spaltenleiter oder zum Isolieren dieses Leiters, wobei der Sensor Mittel umfasst, um während eines selben Integrations- und Lesezyklus von Ladungen eines Pixels zwei Ladungsübertragungen durchzuführen, die erste nach einer ersten Integrationsdauer (Ti1), die zweite nach einer zweiten Integrationsdauer (Ti2), die länger ist als die erste, und ein Mittel zum Abtasten, in einem Abtastkondensator, des vom Spaltenleiter nach der ersten Ladungsübertragung genommenen Potentialpegels, **dadurch gekennzeichnet, dass** er Folgendes umfasst: einen Komparator (CMP) zum Vergleichen des vom Spaltenleiter nach der längsten der beiden Dauern genommenen Potentials mit einem Schwellwert, ein Mittel, um in Abhängigkeit vom Ergebnis des Vergleichs den Inhalt des Abtastkondensators durch den nach der zweiten Ladungsübertragung vom Spaltenleiter genommenen Potentialpegel zu ersetzen oder nicht, und ein Mittel zum Liefern eines digitalen Ausgangssignals, das gemäß dem Ergebnis des Vergleichs
- entweder ein digitaler Wert ist, der den Potentialpegel repräsentiert, der vom Spaltenleiter nach der längsten der beiden Dauern genommen wird,
- oder ein digitaler Wert ist, der den Potentialpegel repräsentiert, der vom Spaltenleiter nach der kürzeren der beiden Dauern genommen wird,
- und ein Informationsbit über das Ergebnis des Vergleichs.

## Claims

1. A method for reading charges deriving from pixels of an image capture matrix, in which the pixels of one and the same row are addressed simultaneously for each to establish, on a respective column conductor (CC) linked to a read circuit, a potential level representing the charges generated by the lighting of this pixel, and in which a pixel is an active pixel comprising at least one photodiode (PD), a charge storage node (ND), and a row selection transistor (T5) for linking the storage node to the column conductor or isolating it from this conductor, the integration of charges in the photodiode and the reading of the charges being done according to the following sequence of operations: integration of charges in the photodiode during a first integration period Ti1, first transfer of the thus integrated charges from the photodiode to the storage node at the end of the first integration period, integration of charges in the photodiode during a second period Ti2 different from the first, refering the potential from the storage node to the column conductor (CC), first sampling, in a capacitor (C1) of the read circuit, of a first potential level present at this moment on the column conductor and resulting from the first charge transfer, second charge transfer from the photodiode into the storage node, and, subsequently, an analog-digital conversion of the sampled potential level in the capacitor, the method being **characterized in that** the first integration period is shorter than the second and **in that** after the second charge transfer and before the analog-digital conversion, a second conditional sampling is performed, in the same capacitor, of a second potential level present on the column conductor and resulting from the second charge transfer, the second sampling being conditioned by the result of a comparison between the second potential level present on the column conductor and a predetermined threshold level, the result of the comparison being transmitted to determine a multiplying factor to be applied to the result of the analog-digital conversion.

2. The method as claimed in claim 1, **characterized in that** a signal representing the lighting of the pixel is established by multiplying the output of the analog-digital conversion by the multiplying factor, the multiplying factor being the ratio between the longer and the shorter integration period in the case where the result of the comparison indicates that the threshold of charge quantities discharged into the storage node during the longer of the periods is exceeded, and being equal to 1 in the contrary case.

3. The method as claimed in one of claims 1 and 2, **characterized in that** the pixel comprises a transistor for resetting the level of the storage node, making it possible to reset the potential of the storage node to a predetermined level, **in that** the level resetting is done by briefly making this transistor conduct after the first sampling, and **in that** an intermediate sampling, in a second sampling capacitor (C2) of the sampling circuit, is performed between this level resetting and the second charge transfer, the analog digital conversion being made on the difference between the sampled levels in the two capacitors.

4. An image sensor in MOS technology, comprising a matrix of pixels organized in rows and in columns, the pixels of one and the same column being linked to a column conductor which is in turn linked to a read circuit, each pixel comprising a photodiode linked by a transfer transistor to a storage node, and a row selection transistor (T5) for linking the storage node to the column conductor or isolating it from this conductor, the sensor comprising means for performing, during one and the same cycle of integration and of reading of the charges of a pixel, two charge transfers, the first after a first integration period (Ti1), the second after a second integration period (Ti2) longer than the first, and a means for sampling in a sampling capacitor the potential level taken by the column conductor after the first charge transfer, **characterized in that** it comprises a comparator (CMP) for comparing the potential taken by the column conductor after the longer of the two periods with a threshold, a means for replacing or not replacing, depending on the result of the comparison, the content of the sampling capacitor with the potential level taken by the column conductor after the second charge transfer, and a means for supplying a digital output signal which is, depending on the result of the comparison,
- either a digital value representing the potential level taken by the column conductor after the longer of the two periods,
- or a digital value representing the potential level taken by the column conductor after the shorter of the two periods,
- and an information bit concerning the result of the comparison.
